# EUROPEAN PATENT SPECIFICATION

(11) **EP 0 846 398 B1**
(45) Date of publication and mention of the grant of the patent: **28.11.2001**
(21) Application number: 97919608.6
(22) Date of filing: 14.05.1997
(51) Int. Cl.: H04N 7/28

(54) **MOTION VECTOR PROCESSING**
VERARBEITUNG VON BEWEGUNGSVEKTOREN
TRAITEMENT DE VECTEURS DE MOUVEMENT

(30) Priority: 24.05.1996 EP 96201462
(43) Date of publication of application: 10.06.1998
(73) Proprietor: Koninklijke Philips Electronics N.V., 5621 BA Eindhoven (NL)
(72) Inventor: DE HAAN, Gerard, NL-5656 AA Eindhoven (NL); LO MUZIO, Pierluigi, NL-5656 AA Eindhoven (NL); SCHUTTEN, Robbert, Jan, NL-5656 AA Eindhoven (NL)
(74) Representative: Steenbeek, Leonardus Johannes
(86) International application number: IB9700547
(87) International publication number: WO9746020

(56) References cited:
- EP-A- 0 578 290
- EP-A- 0 615 386
- DE-A- 19 510 389
- US-A- 5 515 114

## Description

The invention relates to a method and device for furnishing motion vectors, and to an image signal processing apparatus and an image display apparatus incorporating such a motion vector processing device.

DE-A-195.10.389 discloses a method and a circuit arrangement for receiving coded video signals. The method concerns a video signal which contains a sequence of images with compressed redundancy, e.g. coded in accordance with the MPEG2-standard. The motion decoding is carried out first. The post-processing of the motion-decoded fields, which post-processing essentially contains interpolations, is carried out next together with the processing to remove flicker. Advantageously, the motion vectors retrieved at the motion decoding, are used also for the flicker removal.

Motion estimation can be seen as an optimization problem: a sometimes complex, but usually simple criterion function has to be minimized or maximized to find an output motion vector. There are brute force methods that simply try all possible vectors, in a predefined range, in order to be sure to obtain the global optimum of the criterion function. Also there are efficient approaches that test only the most likely motion vectors. This likelihood is usually determined by spatial or temporal proximity, and consequently temporal and spatial prediction vectors have been popular in the efficient motion estimation algorithms. Depending on the motion estimation algorithm used, the properties of the resulting motion vector fields are different, so that the application areas of the various motion estimation algorithms are different. Motion vectors can be used in high quality video signal processing, like motion compensated scan conversion, motion compensated noise reduction and image coding. The intended processing puts constraints on various quality aspects of the motion vectors. For example, high quality motion compensated scan conversion requires a motion vector field where the vectors represent the true motion vectors (i.e., true direction and speed) within the image sequence. For coding applications this is irrelevant, as the only quality criterion is a low average prediction error.

Brute force methods like full search block matching tend not to give true motion vectors. Instead, full search block matching minimizes the error between blocks, so its vectors will connect two blocks that have a minimal error between these two blocks, which is suitable for minimizing the prediction error in coding applications. While these minimal errors work efficiently for compression algorithms like MPEG, the resulting vectors are unsuitable for use in high quality scan conversion. On the other hand, more efficient motion estimators like 3-D recursive block matching tend to give true motion vectors that can be used in high quality scan conversion but which may not be suitable for use in compression algorithms.

With the emergence of MPEG and other types of video compression it is possible to have input video material that already contains motion vectors, so at first sight it may seem that for this type of source material motion estimation at the receiver side is not necessary. However, it is not certain that these motion vectors can be directly used for e.g. scan rate conversion, because it is unknown whether the MPEG motion vectors represent true motion or not. At the decoder/receiver side it is unknown what type of motion estimation algorithm was used at the encoder/transmitter side, so one must assume, as a worst case situation, that the MPEG motion vectors are optimized for an efficient compression and that they do not represent true motion vectors. For example, a homogeneous background could produce strange and long inconsistent vectors when small changes of brilliance happen in a heterogeneous way. More specifically, periodical structures and noise in picture areas with little detail, may cause such inconsistent vectors. Another problem with motion vectors in MPEG data streams is that it is uncertain that all motion vectors are transmitted within the data stream. For these reasons, the technique proposed by DE-A-195.10.389 seems not to be suitable for high quality post-processing.

In an attempt to solve a similar problem, it has been proposed to smooth the vectors transmitted with a digitally encoded television signal before using these vectors for a field rate upconversion operation, see the M.S.E.E. graduation report "Bewegingsgecompenseerde interpolatie van digitale televisiebeelden", by L.J. Steenbeek, Delft University of Technology, December 1986, pp. 60-68.

It is, *inter alia,* an object of the invention to furnish motion vectors which are suitable for high quality post-processing. To this end, a first aspect of the invention provides a method as defined by claim 1. A second aspect of the invention provides a device as defined by claim 4. A third aspect of the invention provides an image signal processing apparatus as defined by claim 5. A fourth aspect of the invention provides an image display apparatus as defined by claim 6. Advantageous embodiments are defined in the dependent claims.

In a method of furnishing output motion vectors in accordance with a primary aspect of the present invention, motion vectors are retrieved from an encoded image signal, and the retrieved motion vectors are post-processed to obtain the output motion vectors. The post-processing includes generating candidate motion vectors, and selecting the output motion vectors from the candidate motion vectors and the retrieved motion vectors.

These and other aspects of the invention will be apparent from and elucidated with reference to the embodiments described hereinafter.

### In the drawings:

Fig. 1 illustrates in a schematic form various embodiments of an image display apparatus having a motion vector furnishing device in accordance with the present invention; and

Fig. 2 discloses a H261/263 decoder with post-processing in accordance with the present invention.

The problems described in the above background part do not exclude the MPEG motion vectors entirely from use in high quality scan conversion. When an appropriate post-processing is applied, the MPEG motion vectors can be made useful. More specifically, when the receiver is able to determine the quality of the MPEG motion vectors, and when it is able to improve the quality of the MPEG motion vectors so that they meet certain criteria for the intended processing, the MPEG motion vectors can be used. Several possible post processing methods to extend the applicability of the MPEG motion vectors are considered:
1. Process the MPEG motion vectors with an operation like some sort of vector smoothing operation to increase the usability of the MPEG motion vectors.
2. Use the MPEG motion vectors as additional candidates along with spatial and/or temporal candidates in, for instance, a 3-D recursive block matching algorithm.
3. The MPEG motion vectors can be used to calculate the parametric vector candidates.

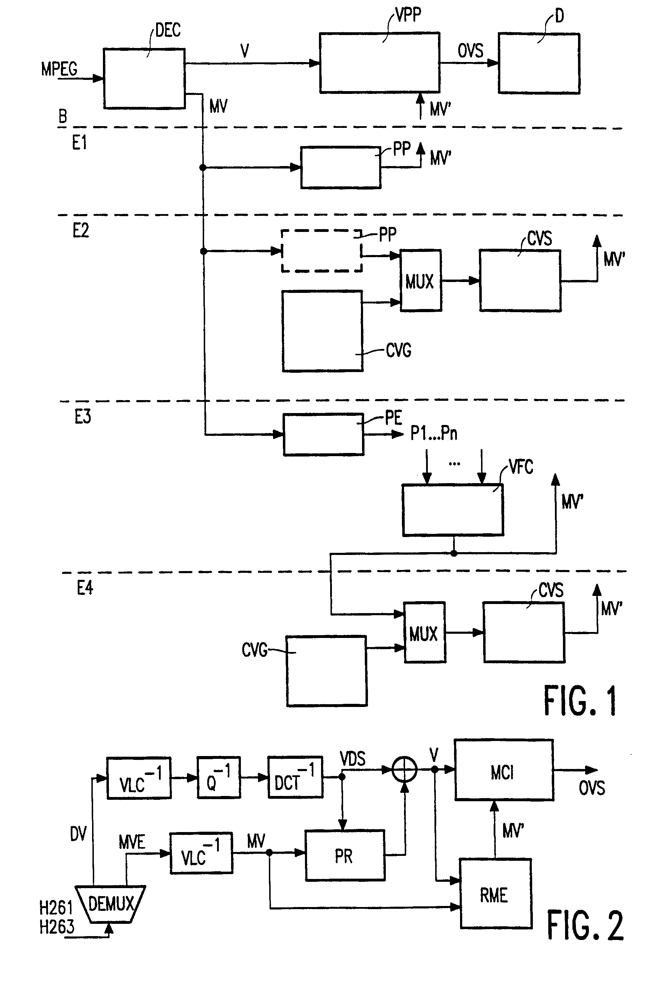

For a schematic description of the various embodiments, reference is made to Fig. 1.

Fig. 1 shows a basic section B, and four sections E1 .. E4 showing four distinct ways to augment the basic section B to obtain four distinct embodiments B+E1, B+E2, B+E3, and B+E3+E4 of an image display apparatus.

In the basic section B, an MPEG signal comprising a video signal V and motion vectors MV, is applied to a decoder DEC in order to retrieve the video signal V in dependence upon the motion vectors MV from the MPEG input signal. The video signal V is applied to a video post-processor VPP to obtain an output video signal OVS having a doubled field frequency and/or line frequency or an improved motion portrayal with respect to the video signal V. Alternatively or in addition, the video post-processor VPP reduces noise and/or changes the number of pixels per line and/or lines per field of the video signal V. The video post-processing carried out by the processor VPP is dependent on improved motion vectors MV'. The output video signal OVS is displayed on a display device D.

In accordance with a first embodiment B+E1, the improved motion vectors MV' are obtained from the motion vectors MV contained in the MPEG signal by means of a post-processor PP. For example, a smoothing operation will reduce most of the artifacts which would arise if the MPEG motion vectors MV were directly used for the video post-processing carried out by the processor VPP. A smoothing operation may include separate low-pass filtering operations on the horizontal and vertical components of the motion vectors. Alternatively, the horizontal and vertical components of the motion vectors can be applied to median filters to replace extreme motion vector component values by existing motion vector component values of motion vectors of neighboring blocks of picture elements.

In accordance with a second embodiment B+E2 which is covered by the claims of the present patent application, the MPEG motion vectors MV are multiplexed by a multiplexer MUX with candidate vectors generated by a candidate vector generator CVG, optionally after a (e.g. smoothing) post-processing operation carried out by the post-processor PP. The multiplexed vectors are applied to a candidate vector selector CVS to obtain improved motion vectors MV' which are expected to show the smallest errors.

In a third embodiment B+E3 which is covered by a copending patent application, a parameter extractor PE extracts motion parameters p1 .. pn from the MPEG motion vectors MV. The motion parameters p1 .. pn are applied to a vector field calculator VFC to obtain the improved motion vectors MV'.

In a fourth embodiment B+E3+E4 which is covered by the claims of the present patent application, the motion vectors calculated by the vector field calculator in section E3 are multiplexed with candidate motion vectors from the candidate vector generator CVG, and applied to the candidate vector selector CVS to obtain the improved motion vectors MV'. This fourth embodiment combines the features of the second and third embodiments.

Obviously, the present invention is not limited to MPEG signals; other signals like H261 or H263 signals can be treated in the same manner. Fig. 2 discloses a H261/263 decoder with post-processing in accordance with the present invention. A H261 or H263 input signal is applied to a demultiplexer DEMUX to obtain a digital video signal DV and motion vectors MVE. The motion vectors MVE are applied to a variable length decoder VLC⁻¹ to obtain decoded motion vectors MV. The digital video signal DV is applied to a cascade connection of a variable length decoder VLC⁻¹, an inverse quantizer Q⁻¹, and a discrete cosine transform (DCT) decoder DCT⁻¹, to obtain a video difference signal VDS. The video difference signal VDS and the motion vectors MV are applied to a prediction block PR, whose output is added to the video difference signal VDS to obtain the decoded video signal V. The decoded video signal V and the motion vectors MV are applied to a recursive motion estimator RME to obtain improved motion vectors MV' in dependence on which the decoded video signal V is processed by a motion-compensated interpolator MCI to obtain an output video signal OVS. In a sequence of coded images comprising intra-frame coded images (which stand alone), predictively coded images (which can be decoded by means of a preceding intra-frame decoded image or a preceding decoded predictively coded image, and the motion vectors MV), and bi-directionally coded images between an intra-frame coded image and a predictively coded image or between two predictively coded images, the improved motion vectors MV' are preferably used to decode (i.e. interpolate) the bi-directionally coded images.

The embodiment of Fig. 2 can be implemented on a PC add-on card in a multimedia PC.

The basic considerations underlying a primary aspect of the present invention can be summarized as follows. Different motion estimation algorithms will have different applications based on the properties of their resulting vector fields. MPEG video data streams contain motion vectors, which can possibly be used in high quality video processing. However, it is likely that these MPEG motion vectors are optimized to achieve an efficient compression, so that these vectors cannot be expected to represent the true motion. This means that additional processing is needed to improve their quality and usability for a high quality post-processing. It is proposed to process the MPEG motion vectors at the receiver side. For instance, they can be used as additional candidate vectors in an efficient motion estimator. In this manner, the applicability of MPEG motion vectors is extended.

The following salient features of preferred embodiments of the present invention can be mentioned. A post-operation on motion vectors, that are received along with a video signal, intended to further increase a quality aspect of said vectors like e.g. their spatial and/or temporal smoothness, so that they can be used for high quality video signal processing. A post operation on motion vectors, that are received along with a video signal, where the motion vectors are used, possibly after a post processing, as additional candidates for some, or all, of the blocks in an efficient motion estimator that uses a limited set of possible vector candidates. An operation where the motion vectors are used the generate the parameters of a parametric model that describes the global motion within the video sequence. An operation where these extracted parameters are used to generate additional candidates for some, or all, of the blocks in an efficient motion estimator that uses a limited set of possible vector candidates.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The invention can be implemented by means of hardware comprising several distinct elements, and by means of a suitably programmed computer.

## Claims

1. A method of furnishing output motion vectors (MV'), the method comprising the steps of:
retrieving (DEC; DEMUX, VLC⁻¹) motion vectors (MV) from an encoded image signal (MPEG; H261, H263); and
post-processing (RME) the retrieved motion vectors (MV) to obtain the output motion vectors (MV'), wherein the post-processing step (RME) includes the steps of:
generating (CVG) candidate motion vectors; and
selecting (CVS) said output motion vectors (MV') from said candidate motion vectors and said retrieved motion vectors (MV).

2. A method as claimed in claim 1, wherein the post-processing step (RME) includes the step of subjecting said retrieved motion vectors (MV) to a smoothing operation (PP) to obtain smoothed vectors, and where in said selecting step (CVS), said output motion vectors (MV') are selected from said candidate motion vectors and said smoothed vectors.

3. A method as claimed in claim 1, wherein the post-processing step (RME) includes the steps of:
extracting (PE) motion parameters (p1 .. pn) from said retrieved motion vectors (MV);
calculating parametric motion vectors in dependence upon said motion parameters (p1 .. pn); and
where in said selecting step (CVS), said output motion vectors (MV') are selected from said candidate motion vectors and said parametric motion vectors.

4. A device for furnishing output motion vectors (MV'), the device comprising:
means for retrieving (DEC; DEMUX, VLC⁻¹) motion vectors (MV) from an encoded image signal (MPEG; H261, H263); and
means for post-processing (RME) the retrieved motion vectors (MV) to obtain the output motion vectors (MV'), wherein the post-processing means (RME) include:
means for generating (CVG) candidate motion vectors; and
means for selecting (CVS) said output motion vectors (MV') from said candidate motion vectors and said retrieved motion vectors (MV).

5. An image signal processing apparatus, comprising:
an output motion vector furnishing device (DEC, PP; DEMUX, VLC⁻¹, RME) as claimed in claim 4;
means (DEC; VLC⁻¹, Q⁻¹, DCT⁻¹, PR) for providing a decoded image signal (V) in response to said encoded image signal (MPEG; H261, H263); and
means for post-processing (VPP; MCI) said decoded image signal (V) in dependence upon said output motion vectors (MV'), to obtain a post-processed image signal (OVS).

6. An image display apparatus, comprising:
an image signal processing apparatus as claimed in claim 5; and
means (D) for displaying said post-processed image signal (OVS).

## Patentansprüche

1. Verfahren zum Liefern von Ausgangs-Bewegungsvektoren (MV'), wobei dieses Verfahren die nachfolgenden Verfahrensschritte umfasst:
- das Wiedergewinnen (DEC; DEMUX, VLC⁻¹) von Bewegungsvektoren (MV) aus einem codierten Bildsignal (MPEG; H261, H263); und
- das Nachverarbeiten (RME) der wiedergewonnenen Bewegungsvektoren (MV) zum Erhalten der Ausgangs-Bewegungsvektoren (MV'), wobei der Nachverarbeitungsschritt (RME) die nachfolgenden Schritte umfasst:
-- das Erzeugen (CVG) von Kandidat-Bewegungsvektoren; und
-- das Selektieren (CVS) der genannten Ausgangs-Bewegungsvektoren (MV') aus den genannten Kandidat-Bewegungsvektoren und der genannten wiedergewonnenen Bewegungsvektoren (MV).

2. Verfahren nach Anspruch 1, wobei der Nachverarbeitungsschritt (RME) den nachfolgenden Schritt umfasst, wobei die genannten wiedergewonnenen Bewegungsvektoren (MV) einem Glättungsvorgang (PP) ausgesetzt wird zum Erhalten geglätteter Vektoren, und wobei in dem genannten Schritt (CVS) die genannten Ausgangs-Bewegungsvektoren (MV') aus den genannten Kandidat-Bewegungsvektoren und den genannten geglätteten Vektoren selektiert werden.

3. Verfahren nach Anspruch 1, wobei der Nachverarbeitungsschritt (RME) die nachfolgenden Schritte umfasst:
- das Extrahieren (PE) von Bewegungsparametern (p1 .. pn) aus den genannten wiedergewonnenen Bewegungsvektoren (MV);
- das Berechnen parametrischer Bewegungsvektoren in Abhängigkeit von den genannten Bewegungsparametern (p1 .. pn); und
- wobei in dem genannten Selektionsschritt (CVS) die genannten Ausgangs-Bewegungsvektoren (MV') aus den genannten Kandidat-Bewegungsvektoren und den genannten parametrischen Bewegungsvektoren selektiert werden.

4. Anordnung zum Liefern von Ausgangs-Bewegungsvektoren (MV'), wobei diese Anordnung die nachfolgenden Elemente umfasst:
- Mittel zum Zurückgewinnen (DEC; DEMUX; VLC⁻¹) von Bewegungsvektoren (MV) aus einem codierten Bildsignal (MPEG; H261, H263); und
- Mittel zum Nachverarbeiten (RME) der zurückgewonnenen Bewegungsvektoren (MV) zum Erhalten der Ausgangs-Bewegungsvektoren (MV'), wobei die Nachverarbeitungsmittel (RME) die nachfolgenden Elemente umfassen:
-- Mittel zum Erzeugen (CVG) von Kandidat-Bewegungsvektoren; und
-- Mittel zum Selektieren (CVS) der genannten Ausgangs-Bewegungsvektoren (MV') aus den genannten Kandidat-Bewegungsvektoren und den genannten zurückgewonnenen Bewegungsvektoren (MV).

5. Bildsignalverarbeitungsanorndung, welche die nachfolgenden Elemente umfasst:
- eine Anordnung zum Liefern von Ausgangs-Bewegungsvektoren (DEC, PP; DEMUX, VLC⁻¹, RME) nach Anspruch 4;
- Mittel (DEC; VLC⁻¹,Q⁻¹,DCT⁻¹, PR) zum liefern eines decodierten Bildsignals (V) in Reaktion auf das genannte codierte Bildsignal (MPEG; H261, H263); und
- Mittel zum Nachverarbeiten (VPP; MCI) des genannten decodierten Bildsignals (V) in Abhängigkeit von den genannten Ausgangs-Bewegungsvektoren (MV'), zum Erhalten eines nachverarbeiteten Bildsignals (OVS).

6. Bildwiedergabeanordnung, das die nachfolgenden Elemente umfasst:
- eine Anordnung zum Verarbeiten eines Bildsignals nach Anspruch 5; und
- Mittel (D) zum Wiedergeben des genannten nachverarbeiteten Bildsignals (OVS).

## Revendications

1. Procédé pour fournir des vecteurs de mouvement de sortie (MV'), le procédé comprenant les étapes suivantes :
extraire (DEC; DEMUX, VLC⁻¹) des vecteurs de mouvement (MV) d'un signal image codé (MPEG; H261, H263), et
post-traiter (RME) les vecteurs de mouvement (MV) extraits pour obtenir les vecteurs de mouvement de sortie (MV'), dans lequel l'étape de post-traitement (RME) inclut les étapes suivantes :
produire (CVG) des vecteurs de mouvement potentiels, et
sélectionner (CVS) lesdits vecteurs de mouvement de sortie (MV') à partir desdits vecteurs de mouvement potentiels et desdits vecteurs de mouvement (MV) extraits.

2. Procédé suivant la revendication 1, dans lequel l'étape de post-traitement (RME) inclut l'étape de soumettre lesdits vecteurs de mouvement (MV) extraits à une opération de lissage (PP) pour obtenir des vecteurs lissés, et dans lequel, dans ladite étape de sélection (CVS), lesdits vecteurs de mouvement de sortie (MV') sont sélectionnés à partir desdits vecteurs de mouvement potentiels et desdits vecteurs lissés.

3. Procédé suivant la revendication 1, dans lequel l'étape de post-traitement (RME) inclut les étapes suivantes :
extraire (PE) des paramètres de mouvement (p1..pn) desdits vecteurs de mouvement (MV) extraits ;
calculer des vecteurs de mouvement paramétriques en fonction desdits paramètres de mouvement (p1..pn), et
dans lequel, dans ladite étape de sélection (CVS), lesdits vecteurs de mouvement de sortie (MV') sont sélectionnés à partir desdits vecteurs de mouvement potentiels et desdits vecteurs de mouvement paramétriques.

4. Dispositif pour fournir des vecteurs de mouvement de sortie (MV'), le dispositif comprenant :
des moyens pour extraire (DEC; DEMUX, VLC⁻¹) des vecteurs de mouvement (MV) d'un signal image codé (MPEG; H261, H263), et
des moyens pour post-traiter (RME) les vecteurs de mouvement (MV) extraits pour obtenir les vecteurs de mouvement de sortie (MV'), dans lequel les moyens de post-traitement (RME) incluent :
des moyens pour produire (CVG) des vecteurs de mouvement potentiels, et
des moyens pour sélectionner (CVS) lesdits vecteurs de mouvement de sortie (MV') à partir desdits vecteurs de mouvement potentiels et desdits vecteurs de mouvement (MV) extraits.

5. Appareil de traitement de signaux image, comprenant :
un dispositif de fourniture de vecteurs de mouvement de sortie (DEC, PP; DEMUX, VLC⁻¹, RME) suivant la revendication 4;
des moyens (DEC; VLC⁻¹, Q⁻¹, DCT⁻¹, PR) pour fournir un signal image décodé (V) en réaction audit signal image codé (MPEG; H261, H263), et
des moyens pour post-traiter (VPP; MCI) ledit signal image décodé (V) en fonction desdits vecteurs de mouvement de sortie (MV') pour obtenir un signal image post-traité (OVS).

6. Appareil d'affichage d'images, comprenant :
un appareil de traitement de signaux image suivant la revendication 5, et
des moyens (D) pour afficher ledit signal image post-traité (OVS).
